# EUROPEAN PATENT SPECIFICATION

(11) **EP 2 895 358 B1**
(45) Date of publication and mention of the grant of the patent: **04.12.2019**
(21) Application number: 13762113.2
(22) Date of filing: 12.09.2013
(51) Int. Cl.: B60R 22/02, B60R 22/14

(54) **SAFETY BELT RETENTION DEVICE**
EINZUGSVORRICHTUNG FÜR SICHERHETSGURT
DISPOSITIF DE RETENUE DE CEINTURE DE SECURITE

(30) Priority: 12.09.2012 NO 20121029
(43) Date of publication of application: 22.07.2015
(73) Proprietor: HTS Hans Torgersen & Sønn AS, 3535 Krøderen (NO)
(72) Inventor: VAN MOURIK, Okke, NL-3514 BS Utrecht (NL); SMITS, Joyce, NL-1052 KC Amsterdam (NL)
(74) Representative: Onsagers AS
(86) International application number: PCT/EP2013/068877
(87) International publication number: WO 2014/041051

(56) References cited:
- WO-A1-2008/034179
- US-A- 5 005 865
- US-A- 5 624 136
- US-B1- 6 935 700

## Description

The present invention relates to a safety belt retention device, where the safety belt retention device will prevent a transversal belt section of a vehicle safety belt, e.g. a three-point safety belt, from sliding up onto a user's abdomen and exerting pressure against the user's abdomen in the event of abrupt braking or vehicle crash, which may result in injuries to internal organs, especially the womb and foetus in pregnant women, or of external auxiliary organs of stoma operated persons.

Use of a vehicle safety belt reduces the number of serious injuries and deaths in connection with vehicle accidents. Such vehicle safety belts are designed as a three-point safety belt, where the three-point safety belt includes a transversal belt section designed to extend across the abdomen of the user and a diagonal belt section designed to extend across the user's upper body over one shoulder so as to limit forward movement in the event of a braking or a collision. With the safety belt in its attached secured position, the diagonal belt section tends to pull the safety belt upwardly so that the transversal belt section tends to ride up across the passenger's stomach. This can cause serious abdominal injury to the user and is particularly dangerous for pregnant women.

Thus, a need has arisen for an improved safety belt arrangement as compared to those previously known, which will also protect the abdomen of the user.

US 5.005.865 describe a seatbelt positioning assembly for positioning a seatbelt of a vehicle along the lower abdominal region of a pregnant person so as to avoid crossing over the womb. The seatbelt positioning assembly comprises a seat pad adapted to be positioned on the seat of the vehicle being secured thereto by a securing strap fastened about the seat back portion. A sleeve is removably fitted along a portion of the length of the seatbelt wherein a pair of positioning straps connected to and extending from the seat pad are adapted for attachment with a bottom edge of the sleeve so as to pull the sleeve and, accordingly, the attached seatbelt downwardly in position along the lower abdominal region of the user.

EP 456.745 describes a device for use with a safety belt and a seat in a vehicle to prevent a lap portion of the safety belt from sliding up to and pressing against the user's abdomen in case of a collision. The lap portion of the safety belt is releasably fastened to a connecting means, which is fastened between the user's thighs to a sitting support.

US 6.935.700 B2 discloses a safety belt retention device according to the preamble of claim 1.

It is an object of the present invention to minimize and possibly alleviate one or more of the disadvantages of the prior art, or to provide a useful alternative.

A further object of the present invention is to provide a safety belt retention device with a fastening means system, such that the safety belt retention device can be used in various vehicle models and car seat configurations.

These objects are achieved with a safety belt retention device according to the following independent claim, with additional embodiments set forth in the dependent claims.

According to the present invention a safety belt retention device as defined in claim 1 is provided.

The pad of the safety belt retention device may comprise several panels, for instance three panels, where at least one of the panels may be manufactured from a less flexible material in order to provide certain stiffness in the safety belt retention device. The stiffer panel may then be arranged between a softer top and bottom panel. Furthermore, the stiffer panel may then serve as an anchor point for the safety belt receiving means and the fastening means system. However, it should be understood that the pad of the safety belt retention device may comprise fewer or more panels.

The safety belt receiving means and the fastening means system are fastened to the stiffer panel in appropriate ways, for instance by stitching, gluing etc.

The top panel and bottom panel may preferably be manufactured of a soft and insulating material of great strength and resistance to tearing.

In one embodiment the bottom panel may be manufactured from a material that will provide friction between the pad and the upper seat surface of the vehicle seat when the pad is arranged on the vehicle seat. Alternatively, an underside of the bottom panel may be provided with Velcro over at least a part of its surface.

The pad of the safety belt retention device may also be provided with a rim around its periphery in order to protect the pad against wear and tear.

The fastening means system of the safety belt retention device comprises a tensioning belt and a plurality of snap hooks, where the tensioning belt is used to secure the safety belt retention device around the vehicle seat, while the snap hooks are used to secure the safety belt retention device to standard anchoring points in the vehicle.

The fastening means system will thereby provide a more flexible solution, as the safety belt retention device according to the present invention may be used in both a front seat and a back seat of the vehicle and may furthermore be used with standard anchoring points in the vehicle or a vehicle without such standard anchoring points, as the safety belt retention device can then be secured around the vehicle seat.

The tensioning belt comprises a male strap section and a female strap section, where the male and female strap sections can be connected through a male and female buckle. One end of the male strap section may be provided with a ring element, while the opposite end of the male strap section may be provided with a male buckle. The female strap section may be provided with a similar ring element on one end, while the opposite end may be provided with a female buckle.

The snap hooks, which are fastened to the pad, preferably to the stiffer panel of the pad, are provided with a spring element, whereby the tensioning belt can be attached and disengaged easily to and from the snap hooks.

It should be understood that the fastening means system may be comprised of other elements, for instance other types of hooks, Isofix connectors, connecting means etc., as long as the purpose of the fastening means system is obtained.

The safety belt receiving means may comprise an elastic strap, where one end of the elastic strap in appropriate ways is connected to the stiffer panel of the pad, while the opposite end of the elastic strap is connected to a sleeve. The sleeve is provided with at least one push button, such that the sleeve can be opened to receive the transversal belt section of the vehicle safety belt. When the sleeve is locked, the elastic strap will, due to its elastic properties, pull the transversal belt section away from the passenger's abdomen, while the sleeve will retain the transversal belt section in this position.

Furthermore, the elastic strap may also be provided with one or more elastic elements that will tend to press the safety belt receiving means down into abutment with the pad, such that the safety belt receiving means will not have to be removed before the user sits on the pad.

Other advantages and characteristics of the present invention will be apparent from the following detailed description, the appended drawings and the following claims, wherein
Figures 1A-1C show a safety belt retention device according to the present invention, where figure 1A is a top view of a pad of the safety belt retention device, figure 1B is a side view of the pad of the safety belt retention device and figure 1C is a fastening means system of the safety belt retention device,
Figure 2 is an exploded view of the safety belt retention device, showing the different elements,
Figure 3 shows the fastening means system connected to the pad,
Figure 4A shows how the safety belt retention device according to the present invention is arranged in a front seat of a vehicle,
Figure 4B shows how the fastening means system is used to secure the safety belt retention device to the front seat of the vehicle,
Figures 4C and 4D show how the safety belt is connected to the safety belt retention device according to the present invention, and
Figures 5A- 5C show how the safety belt retention device according to the present invention can be used in a back seat of the vehicle.

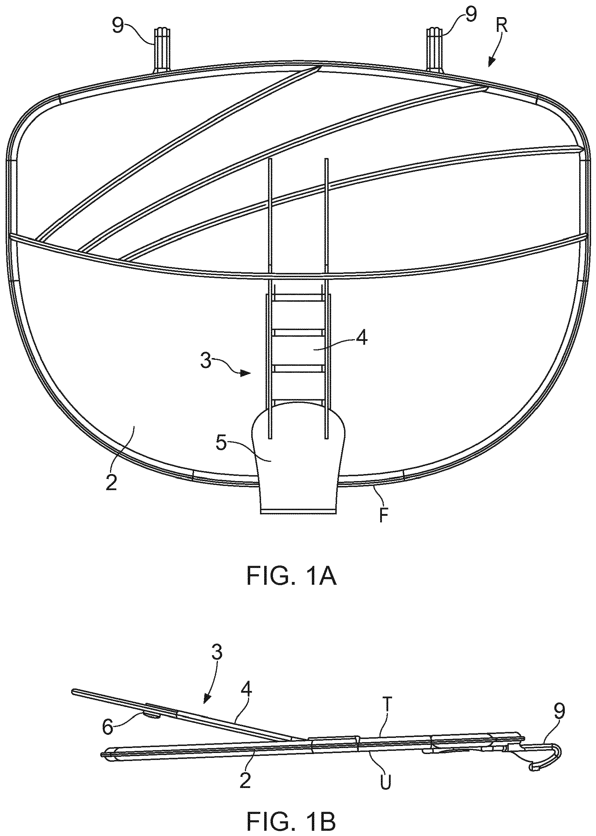

Figure 1A shows a top view of a safety belt retention device 1 according to the present invention, where the safety belt retention device 1 comprises a pad 2 that is adapted to be located on an upper seat surface US of a vehicle seat S in a vehicle. The pad 2 will then be placed on the upper seat surface US with its underside U. A top side T of the pad 2 will then serve as a sitting area for a passenger, for instance a pregnant woman or a stoma operated person, when the safety belt retention device 1 is in use.

The pad 2 is provided with a mainly straight rear edge R, where this mainly straight rear edge R, when in use, will be located in a transition between the upper seat surface US of the vehicle seat S and a back rest BR of the vehicle seat S when the pad 2 is arranged on the seat S. The front edge of the pad 2 is provided with a rounded edge E. However, a person skilled in the art would understand that the safety belt retention device 1 also can be provided with other shapes.

A safety belt receiving means 3 is connected to the pad 2 in appropriate ways, where the safety belt receiving means 3 is arranged on the pad 2 in such a way that the safety belt receiving means 3 will be located between the legs of the passenger when the safety belt retention device 1 is in use.

The safety belt receiving means 3 comprises an elastic strap 4 and a sleeve 5 .The sleeve 5 is provided with a plurality of push buttons 6, such that the sleeve 5 can be opened to receive a transversal belt section 7 of a vehicle safety belt 8, for instance a three-point safety belt. Once the transversal belt section 7 of the vehicle safety belt 8 is placed in the sleeve 5, push buttons 6 are pressed to "lock" the transversal belt section 7 in the sleeve 5. The sleeve 5 of the safety belt receiving means 3 will then retain the transversal belt section 7, while the elastic strap 4 of the safety belt receiving means 3 will, due to its elastic properties, tend to pull the transversal belt section 7 away from the passenger's abdomen.

The safety belt retention device 1 also comprises a fastening means system F, where one part of the fastening means system F comprises two snap hooks 9, while the other part of the fastening means system F comprises a tensioning belt 11. If the safety belt retention device is to be used in a front seat of the vehicle, then the tensioning belt 11 is connected to the snap hooks 9, whereby the tensioning belt 11 is arranged around the vehicle seat S in order to secure the safety belt retention device 1 to the vehicle seat S. However, if the safety belt retention system 1 is to be used in a back seat of the vehicle, then the tensioning belt 11 is disengaged from the snap hooks 9, whereby the snap hooks 9 are connected to standard anchorage points 10 arranged in the vehicle in order to secure the safety belt retention device 1 to the back seat of the vehicle.

The mainly straight rear edge R of the pad 2 will then be provided with two snap hooks 9, where the snap hooks 9 are arranged with a distance between each other. The snap hooks 9 are furthermore adapted to cooperate with standard anchorage points 10 in the vehicle seat S. Such snap hooks 9 are well known in the art and will therefore not be discussed further herein.

The snap hooks 9 may be connected directly to the pad 2, or may be connected to the pad 2 through straps (not shown).

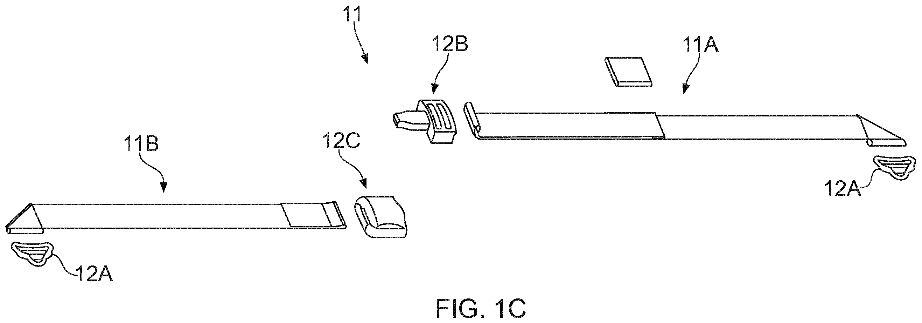

The tensioning belt 11 is shown in figure 1C, where it can be seen that the tensioning belt comprises a male strap section 11A and a female strap section 11B. One end of the male strap section 11A is provided with a ring element 12A, while the opposite end of the male strap section 11A is provided with a male buckle 12B. Similarly, one end of the female strap section 11B is provided with the ring element 12A, while the opposite end of the female strap section 11B is provided with a female buckle 12C. The male and the female strap sections 11A, 11B can therefore be connected to each other through the male and female buckle 12B, 12C and the length of the tensioning belt 11 can be adjusted through the tightening of the male strap section 11A through the male buckle 12B.

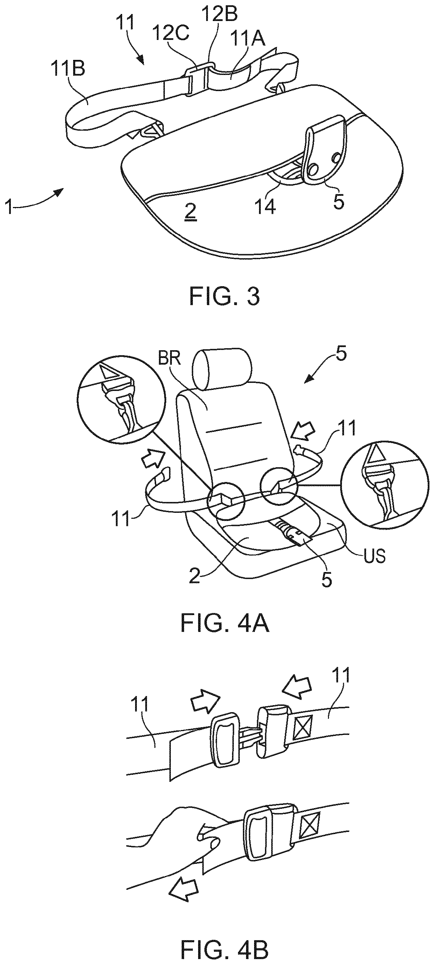

Furthermore, the tensioning belt 11 can be connected to the pad 2 through the snap hooks 9, as each of the ring element 12A of the male and female strap sections 11A, 11B then is to be connected to its respective snap hook 9. This can be seen in figure 3.

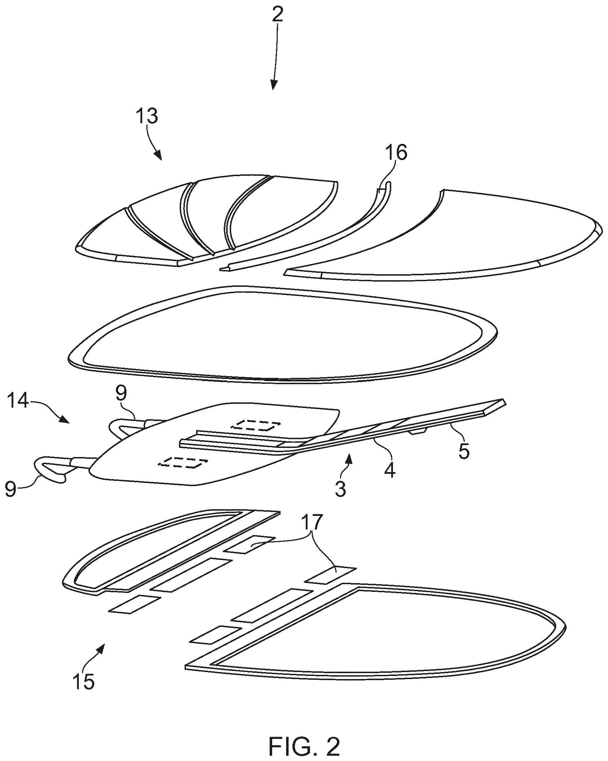

Figure 2 shows, in an exploded view, the different elements of the pad 2, where it can be seen that the pad 2 is comprised of a top panel 13, a stiffer middle panel 14 and a bottom panel 15. The top panel 13 and the bottom panel 15 are two-piece panels, where the pieces are connected to each other through an intermediate part 16 or through a plurality of Velcro strips 17. As the middle panel 14 is manufactured from a stiffer material than the top and bottom panel 13, 15, the middle panel 14 is used as an anchor point for both the snap hooks 9 and the safety belt receiving means 3. The snap hooks 9 will then in appropriate ways be connected to an underside of the middle panel 14, while the belt receiving means 3 will, in similar ways, be connected to an upper side of the middle panel 14.

The top panel 13 and bottom panel 15 may preferably be manufactured of a soft and insulating material of great strength and resistance to tearing.

The snap hooks 9 may for instance be connected to the middle panel 14 through a strap and ring attachment (not shown), in such a way that the snap hooks 9 may be pivoted about the strap and ring attachment, whereby the safety belt retention device 1 to a greater extent can be adapted to different vehicles and vehicle models.

The safety belt receiving means 3 comprises, as mentioned above, an elastic strap 4 and a sleeve 5 provided with push buttons 6. Due to the properties of the elastic strap 4, the elastic strap 4 can be extended a certain length, such that the safety belt receiving means 3 can be adjusted to the passenger's abdomen. This will be advantageous when a pregnant women's abdomen is growing. However, the elastic strap 4 will also try to resume its length before it was extended, whereby this will pull the transversal belt section 7 of the vehicle safety belt 8 away from the passenger's abdomen.

Furthermore, the elastic strap 4 is also provided with one or more elastic elements (not shown) that will tend to straighten out the elastic strap 4, such that the elastic strap 4 and the sleeve 5 are pressed down towards the pad 2. The passenger will then not have to remove the safety belt receiving means away from the sitting area of the pad 2, as the safety belt receiving means 3 already is arranged correctly.

Figure 3 shows the safety belt retention device 1 according to the present invention, where it can be seen that the male and female strap sections 11A, 11B of the tensioning belt 11 are connected to each other and that the tensioning belt 11 furthermore is connected to the pad 2 through the ring elements 12A.

Figure 4A illustrates how the safety belt retention device 1 according to the present invention is used in the front seat of the vehicle. The pad 2 is loosely placed on the upper seat surface US of the front seat S and is pressed down towards the vehicle seat S by the weight of the passenger in a critical situation of braking or a vehicle collision when the influence of forces occurs. In order to ensure that the pad 2 does not slide forwards on the vehicle seat S during normal use and, especially in the event of a braking or a vehicle collision, the fastening means system F is used to secure the pad 2 around the vehicle seat S. The male strap section 11A and the female strap section 11B, already being fastened to the snap hooks 9 through the ring element 12A will then be arranged around the vehicle seat S, whereafter the male and female strap sections 11A, 11B will be connected through the male buckle 12A and female buckle 12C. The tensioning belt 11 can then be tightened by pulling the end of the male strap section 11A, as seen in figure 4B.

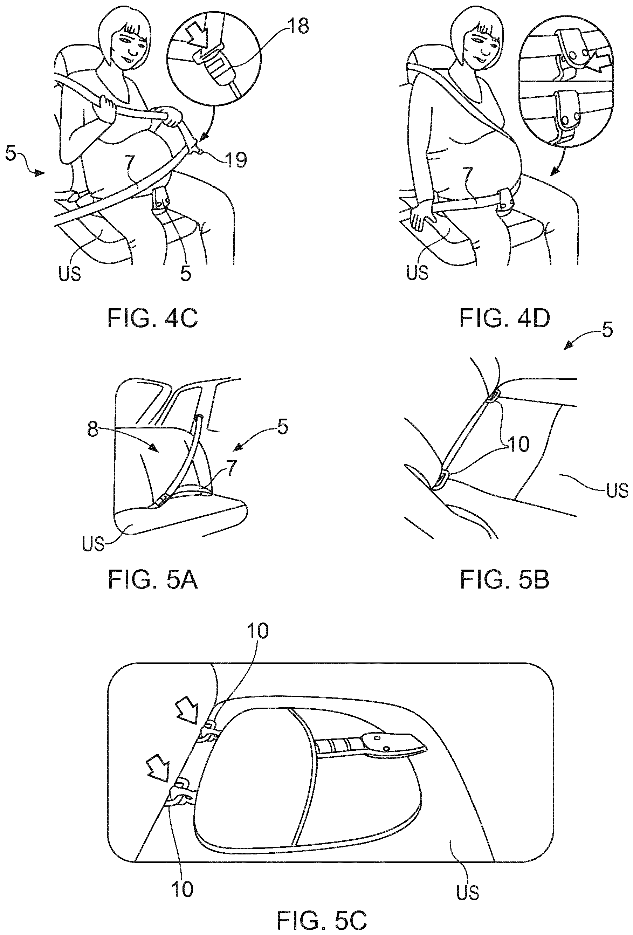

Figures 4C and 4D show how the safety belt 8 of the vehicle is secured to a standard safety belt connection point 18 through a male connection buckle 19 in order to secure the passenger, for instance a pregnant women or a stoma operated person, to the vehicle seat S. When the passenger is secured by the safety belt 8, the passenger lifts the safety belt receiving means 3 in order to open the sleeve 5 of the safety belt receiving means 3 by pulling the push buttons 6. The sleeve 5 is now ready to receive the transversal belt section 7 of the vehicle safety belt 8, whereby the passenger will push the transversal belt section 7 into the sleeve 5 and lock the transversal belt section 7 in the sleeve by pressing the push buttons 6 together.

Figures 5A- to 5C show how the safety belt retention device 1 according to the present invention also can be used in a back seat S of the vehicle, where the tensioning belt 11 cannot be used to secure the pad 2 to the vehicle seat S. In this case the tensioning belt 11 is released from the snap hooks 9 and the pad 2 is secured to the vehicle seat S by use of the snap hooks 9 and the standard anchorage point 10 in the vehicle. Once the pad 2 is secured to the standard anchorage points 10 in the vehicle seat, the same procedure will be used to secure the vehicle safety belt 8 and the transversal belt section 7 of the vehicle safety belt 8 to the safety belt receiving structure 3 as described in figures 4A and 4D.

The invention has now been explained with the aid of several non-limiting exemplary embodiments. A person with skill in the art will understand that a number of variations and modifications can be made to the safety belt retention device as described within the scope of the invention as defined in the appended claims.

## Claims

1. A safety belt retention device (1) comprising a pad (2) adapted to be located on an upper seat surface (US) of a vehicle seat (S), a safety belt receiving means (3) being adapted to retain a transversal belt section (7) of a safety belt (8), the safety belt receiving means (3) being connected to the pad (2) such that, when in use, the safety belt receiving means (3) is being accessible between the legs of a passenger,
**characterised in that** the safety belt retention device (1) further comprises a fastening means system (F), the fastening means system (F) comprises two Isofix connectors (9) fastened to the pad (2), arranged with a distance between each other and adapted to cooperate with standard anchorage points (10) in the vehicle seat (S), and a tensioning belt (11) adapted to be connected to the two Isofix connectors (9) and secured around the vehicle seat (S) when there is no anchorage points (10) arranged in the vehicle seat (S).

2. A device according to claim 1, **characterised in that** the pad (2) comprises a top panel (13) and a bottom panel (15), a stiffer middle panel (14) being arranged between the top panel and bottom panel (13, 15).

3. A device according to claim 1, **characterised in that** an underside (U) of the pad (2) is provided with Velcro (17) over at least a part of its surface.

4. A device according to claim 3, **characterised in that** the Velcro (17) is arranged towards an end of the pad (2).

5. A device according to claim 2, **characterised in that** the Isofix connectors (9) are attached to the stiffer middle panel (14) through straps.

6. A device according to claim 1, **characterised in that** the tensioning belt (11) comprises a male and a female strap section (11A, 11B).

7. A device according to claim 6, **characterised in that** one end of the male strap section (11A) being provided with a ring element (12A) while an opposite end being provided with a male buckle (12B), and one end of the female strap section (11B) being provided with the ring element (12A) while an opposite end being provided with a female buckle (12C).

8. A device according to claim 1, **characterised in that** the safety belt receiving means (3) comprises a sleeve (5) provided with one or more push buttons (6), the sleeve (5) being connected to the pad (2) through a padded elastic strap (4).

9. A device according to claim 8, **characterised in that** the elastic strap (4) is provided with a flexible element that will tend to flatten or straighten the elastic strap (4).

## Patentansprüche

1. Sicherheitsgurt-Rückhaltevorrichtung (1), umfassend ein Polster (2), das dafür eingerichtet ist, auf einer oberen Sitzoberfläche (US) eines Fahrzeugsitzes (S) angeordnet zu werden, ein Sicherheitsgurt-Aufnahmemittel (3), das dafür eingerichtet ist, einen quer verlaufenden Gurtabschnitt (7) eines Sicherheitsgurts (8) zurückzuhalten, wobei das Sicherheitsgurt-Aufnahmemittel (3) derart mit dem Polster (2) verbunden ist, sodass bei Gebrauch das Sicherheitsgurt-Aufnahmemittel (3) zwischen den Beinen eines Passagiers zugänglich ist,
**dadurch gekennzeichnet, dass** die Sicherheitsgurt-Rückhaltevorrichtung (1) ferner ein Befestigungsmittelsystem (F) umfasst, wobei das Befestigungsmittelsystem (F) Folgendes umfasst: zwei an dem Polster (2) befestigte Isofix-Verbinder (9), die mit einem Abstand zueinander angeordnet sind und dafür eingerichtet sind, mit Standard-Verankerungspunkten (10) in dem Fahrzeugsitz (S) zusammenzuwirken, und einen Spanngurt (11), der dafür eingerichtet ist, mit den zwei Isofix-Verbindern (9) verbunden zu werden und um den Fahrzeugsitz (S) gesichert zu werden, wenn keine Verankerungspunkte (10) in dem Fahrzeugsitz (S) angeordnet sind.

2. Vorrichtung nach Anspruch 1, **dadurch gekennzeichnet, dass** das Polster (2) eine obere Platte (13) und eine untere Platte (15) umfasst, wobei eine steifere mittlere Platte (14) zwischen der oberen Platte und der unteren Platte (13, 15) angeordnet ist.

3. Vorrichtung nach Anspruch 1, **dadurch gekennzeichnet, dass** eine Unterseite (U) des Polsters (2) über wenigstens einen Teil ihrer Oberfläche mit einem Klettband (17) versehen ist.

4. Vorrichtung nach Anspruch 3, **dadurch gekennzeichnet, dass** das Klettband (17) in Richtung eines Endes des Polsters (2) angeordnet ist.

5. Vorrichtung nach Anspruch 2, **dadurch gekennzeichnet, dass** die Isofix-Verbinder (9) durch Riemen an der steiferen mittleren Platte (14) angebracht sind.

6. Vorrichtung nach Anspruch 1, **dadurch gekennzeichnet, dass** der Spanngurt (11) einen männlichen und einen weiblichen Riemenabschnitt (11A, 11B) umfasst.

7. Vorrichtung nach Anspruch 6, **dadurch gekennzeichnet, dass** ein Ende des männlichen Riemenabschnitts (11A) mit einem Ringelement (12A) versehen ist, während ein entgegengesetztes Ende mit einem männlichen Gurtschloss (12B) versehen ist, und ein Ende des weiblichen Riemenabschnitts (11B) mit dem Ringelement (12A) versehen ist, während ein entgegengesetztes Ende mit einem weiblichen Gurtschloss (12C) versehen ist.

8. Vorrichtung nach Anspruch 1, **dadurch gekennzeichnet, dass** das Sicherheitsgurt-Aufnahmemittel (3) eine Hülse (5) umfasst, die mit einem oder mehreren Druckknöpfen (6) versehen ist, wobei die Hülse (5) durch einen gepolsterten elastischen Riemen (4) mit dem Polster (2) verbunden ist.

9. Vorrichtung nach Anspruch 8, **dadurch gekennzeichnet, dass** der elastische Riemen (4) mit einem flexiblen Element versehen ist, das dazu neigt, den elastischen Riemen (4) zu glätten oder geradezurichten.

## Revendications

1. Dispositif de retenue de ceinture de sécurité (1) comprenant un coussinet (2) adapté pour être positionné sur une surface de siège supérieure (US) d'un siège de véhicule (S), un moyen de réception de ceinture de sécurité (3) étant adapté pour retenir une section de ceinture transversale (7) d'une ceinture de sécurité (8), le moyen de réception de ceinture de sécurité (3) étant raccordé au coussinet (2) de sorte que, lorsqu'il est utilisé, le moyen de réception de ceinture de sécurité (3) est accessible entre les jambes d'un passager,
**caractérisé en ce que** le dispositif de retenue de ceinture de sécurité (1) comprend en outre un système de moyen de fixation (F), le système de moyen de fixation (F) comprend deux connecteurs Isofix (9) fixés au coussinet (2), agencés avec une distance entre eux et adaptés pour coopérer avec des points d'ancrage standard (10) dans le siège de véhicule (S), et une ceinture de tension (11) adaptée pour être raccordée aux deux connecteurs Isofix (9) et fixée autour du siège de véhicule (S) lorsqu'il n'y a pas de point d'ancrage (10) agencé dans le siège de véhicule (S).

2. Dispositif selon la revendication 1, **caractérisé en ce que** le coussinet (2) comprend un panneau supérieur (13) et un panneau inférieur (15), un panneau central plus rigide (14) étant agencé entre le panneau supérieur et le panneau inférieur (13, 15).

3. Dispositif selon la revendication 1, **caractérisé en ce qu'**une face inférieure (U) du coussinet (2) est prévue avec du Velcro (17) sur au moins une partie de sa surface.

4. Dispositif selon la revendication 3, **caractérisé en ce que** le Velcro (17) est agencé vers une extrémité du coussinet (2).

5. Dispositif selon la revendication 2, **caractérisé en ce que** les connecteurs Isofix (9) sont fixés au panneau central plus rigide (14) par le biais de sangles.

6. Dispositif selon la revendication 1, **caractérisé en ce que** la ceinture de tension (11) comprend une section de sangle mâle et une section de sangle femelle (11A, 11B).

7. Dispositif selon la revendication 6, **caractérisé en ce qu'**une extrémité de la section de sangle mâle (11A) est prévue avec un élément annulaire (12A) alors qu'une extrémité opposée est prévue avec une boucle mâle (12B), et une extrémité de la section de sangle femelle (11B) est prévue avec l'élément annulaire (12A) alors qu'une extrémité opposée est prévue avec une boucle femelle (12C).

8. Dispositif selon la revendication 1, **caractérisé en ce que** le moyen de réception de ceinture de sécurité (3) comprend un manchon (5) prévu avec un ou plusieurs boutons-poussoirs (6), le manchon (5) étant raccordé au coussinet (2) par le biais d'une sangle élastique rembourrée (4).

9. Dispositif selon la revendication 8, **caractérisé en ce que** la sangle élastique (4) est prévue avec un élément flexible qui a tendance à aplatir ou à redresser la sangle élastique (4).
